# EUROPÄISCHE PATENTANMELDUNG

(11) **EP 3 650 742 A1**
(43) Veröffentlichungstag der Anmeldung: **13.05.2020**
(21) Anmeldenummer: 19208431.7
(22) Anmeldetag: 12.11.2019
(51) Int. Cl.: F21S 6/00, F21V 8/00, F21Y 105/00, F21Y 103/10, F21Y 115/10

(54) **OPTIK UND TISCHLEUCHTE**

(30) Priorität: 12.11.2018 CH 13872018
(71) Anmelder: Regent Beleuchtungskörper AG, 4053 Basel (CH)
(72) Erfinder: Reutter, Kornelius, 4056 Basel (CH)
(74) Vertreter: Latscha Schöllhorn Partner AG

(57) **Zusammenfassung**

Eine Optik (1) für eine Tischleuchte (2) ist im Wesentlichen plattentförmig mit einer Vorderseite (12), einer Rückseite (13), die Vorderseite (12) und die Rückseite (13) miteinander verbindenden Seitenkanten (14) und einer Auslenkstruktur (15) ausgebildet. Die Auslenkstruktur (15) ist dazu ausgestaltet, durch eine der Seitenkanten (14) eingestrahltes Licht umzuleiten, sodass es durch die Vorderseite (12) abgestrahlt wird. Die Auslenkstruktur (15) ist ferner so ausgebildet, dass das durch die Vorderseite (12) abgestrahlte Licht eine Hauptabstrahlrichtung (41) aufweist, die einen Abstrahlwinkel (17) zur Vorderseite (12) beschreibt, der in einem Bereich von etwa 10° bis etwa 70°, vorzugsweise in einem Bereich von etwa 20° bis etwa 60° und insbesondere in einem Bereich von etwa 30° bis etwa 50° liegt oder der etwa 45° beträgt.

## Beschreibung

### Technisches Gebiet

Die Erfindung betrifft eine Optik gemäss dem Oberbegriff des unabhängigen Anspruchs 1 und eine Tischleuchte mit einer solchen Optik. Diese Art von im Wesentlichen plattenförmigen Optiken mit einer Vorderseite, einer Rückseite, die Vorderseite und die Rückseite miteinander verbindenden Seitenkanten und einer Auslenkstruktur können dazu ausgestaltete Auslenkstrukturen aufweisen, dass durch eine der Seitenkanten eingestrahltes Licht an ihnen umgeleitet und durch die Vorderseite abgestrahlt wird. Solche Optiken können in unterschiedlichen Bereichen in Leuchten eingesetzt werden, wie beispielsweise zur Ausleuchtung von Arbeitsplätzen wie insbesondere Büroarbeitsplätzen.

### Stand der Technik

Zur Beleuchtung von Räumen oder Arbeitsplätzen werden heutzutage Leuchten in unterschiedlichen auf den jeweiligen Anwendungszweck angepassten Ausführungsformen eingesetzt. Dabei wird zumeist angestrebt, mit den Leuchten Lichtverteilungskurven erzeugen zu können, die einer Ausleuchtung bei einer bestimmungsgemässen Verwendung der Leuchten möglichst gut entsprechen.

Unter anderem werden in Büros zur Ausleuchtung von Arbeitsplätzen beispielsweise auf Schreibtischen Tischleuchten eingesetzt, die zusätzliches Licht zu einer Grundbeleuchtung erzeugen. Insbesondere bei älteren Personen ist eine solche Zusatzbeleuchtung häufig erwünscht beziehungsweise angebracht. Beispielsweise kann die für Arbeitsumgebungen typischerweise vorhandene Grundbeleuchtung von mindesten 300 Lux für Arbeitsplätze häufig nicht ausreichen. So wird der Arbeitsplatz selbst zusätzlich beleuchtet, um eine Beleuchtung von mehr als 500 Lux oder 750 Lux zu erreichen.

Tischleuchten werden typischerweise auf dem auszuleuchtenden Tisch selbst oder angrenzend daran auf dem Fussboden aufgestellt. Häufig umfassen sie einen vertikal Licht abstrahlenden Leuchtkörper, der über ein Gestänge mit einem Fussteil verbunden ist. Das Gestänge kann flexibel einstellbar sein, sodass sich der Leuchtkörper idealerweise möglichst über dem Arbeitsplatz befindet und diesen bevorzugt ausleuchten kann. Solche Tischleuchten sind typischerweise vergleichsweise unhandlich. Die Gestänge können sperrig und insbesondere bei einer idealen Ausleuchtung des Arbeitsplatzes störend sein. Zudem sind flexibel einstellbare Gestänge vergleichsweise anfällig auf Verschleiss, da sie typischerweise mit beweglichen Teilen wie Gelenken oder Drehlagern ausgestattet sind. Zudem können solche Tischleuchten blenden, insbesondere wenn die Leuchtkörper für eine bevorzugte Ausleuchtung des Arbeitsplatzes ideal positioniert sind. Schliesslich können solche Tischleuchten mit Gestänge ein unruhiges Erscheinungsbild generieren, was insbesondere bei einer Ansammlung von Arbeitsplätzen wie beispielsweise in Grossraumbüros unerwünscht sein kann.

Ein Ansatz zur Verbesserung der vorstehenden Situation ist in der EP 3 187 773 A1 beschrieben. Darin wird eine Leuchte vorgeschlagen, die einen Leuchtenkopf mit einer vertikal ausgerichteten Lichtverteilungsplatte umfasst, die mit einer Auslenkstruktur ausgestattet ist. Die Lichtverteilungsplatte wird von einem Leuchtmittel horizontal mit Licht beaufschlagt und lenkt das Licht in Richtung des Arbeitsplatzes um. Insbesondere ist die Auslenkstruktur so beschaffen, dass das Licht asymmetrisch schräg nach unten geleitet wird. Der Leuchtenkopf muss sich also für eine ideale Ausleuchtung des Arbeitsplatzes nicht genau über dem Arbeitsplatz befinden, sondern kann seitlich davon angeordnet werden. So kann verhindert werden, dass der Leuchtenkopf beispielsweise über ein Gestänge flexibel positionierbar sein muss.

Obwohl diese Art von Leuchten einige der vorstehend aufgeführten Nachteile zu beheben vermag, kann sie dennoch teilweise blenden. Zudem ist der Leuchtenkopf horizontal auszurichten, was unerwünscht sein kann.

Der vorliegenden Erfindung liegt daher die Aufgabe zugrunde, eine Leuchte beziehungsweise ein Bauteil für eine Leuchte vorzuschlagen, die beispielsweise als eine oder in einer Tischleuchte eine effiziente, gleichmässige und möglichst vollständige Ausleuchtung eines Arbeitsplatzes wie insbesondere eines Schreib- oder Arbeitstischs ermöglicht.

### Darstellung der Erfindung

Die Aufgabe wird erfindungsgemäss durch eine Optik gelöst, wie sie im unabhängigen Anspruch 1 definiert ist, sowie durch eine Tischleuchte, wie sie im unabhängigen Anspruch 10 definiert ist. Vorteilhafte Ausführungsvarianten der Erfindung ergeben sich aus den abhängigen Ansprüchen.

In einem Aspekt ist die Erfindung eine Optik für eine Tischleuchte. Die Optik ist im Wesentlichen plattenförmig mit einer zur quasi aufrechten Ausrichtung ausgestalteten Vorderseite, einer Rückseite, die Vorderseite und die Rückseite miteinander verbindenden Seitenkanten sowie einer Auslenkstruktur ausgebildet. Die Auslenkstruktur ist dazu ausgestaltet, durch eine der Seitenkanten eingestrahltes Licht umzuleiten, sodass es durch die Vorderseite abgestrahlt wird. Insbesondere ist die Auslenkstruktur so konfiguriert, dass das durch die Vorderseite abgestrahlte Licht eine Hauptabstrahlrichtung aufweist, die einen Abstrahlwinkel zur Vorderseite beschreibt, der in einem Bereich von etwa 10° bis etwa 70°, vorzugsweise in einem Bereich von etwa 20° bis etwa 60° und insbesondere in einem Bereich von etwa 30° bis etwa 50° liegt oder der etwa 45° beträgt.

Die Optik kann insbesondere ein Bauteil für eine Leuchte sein. Beispielsweise kann sie in einem Leuchtenkopf einer Tischleuchte oder einer Stehleuchte eingebaut sein. Sie kann bevorzugt transparent oder im Wesentlichen transparent sein. Transparente Materialien, die für die Verwendung in einer Optik geeignet sind, können Glas und insbesondere Kunststoffe sein beziehungsweise umfassen. Auch kann die Optik einen transparenten Grundkörper aufweisen, der mit einer lichtformenden Folie versehen ist.

Der Begriff "transparent" kann sich in diesem Zusammenhang auf lichtdurchlässig beziehungsweise eine zumindest teilweise Durchlässigkeit für sichtbares Licht beziehen. Der Begriff "lichtdurchlässig" wiederum kann sich insbesondere auf eine gedämpfte oder ungedämpfte Durchlässigkeit des mittels eines Leuchtmittels erzeugten Lichts beziehen.

Der Begriff "plattenförmig" kann sich im Zusammenhang mit der Optik auf einen im Wesentlichen quader- oder würfelförmigen Körper beziehen. Insbesondere kann die Optik quasi ein Quader sein, der Rechtecke als Seitenkanten umfasst, die wesentlich länger als breit sind. Dadurch kann der Quader beziehungsweise die Optik verhältnismässig flach sein beziehungsweise seine Tiefe oder Dicke kann im Vergleich zu seiner Breite und Länge verhältnismässig klein sein. So können die Seitenkanten im Vergleich zur Vorderseite beziehungsweise Rückseite relativ schmal beziehungsweise linienförmig ausgeformt sein und die Vorderseite beziehungsweise Rückseite im Vergleich zu den Seitenkanten relativ breit beziehungsweise flächig.

Die Begriffe "Vorderseite" und "Rückseite" im Zusammenhang mit der Optik können sich auf eine in bestimmungsgemässer Aufstellung vordere beziehungsweise hintere Fläche der Optik beziehen. Die Vorderseite und die Rückseite können eine gleiche oder auch eine unterschiedliche Grundform aufweisen. Sie können quasi eben sein. Der Begriff "eben" im Zusammenhang mit der Vorderseite und Rückseite kann sich auf eine quasi flache Form im Wesentlichen ohne Wölbungen oder Krümmungen beziehen. Dabei kann die Vorder- beziehungsweise Rückseite auch eine gewisse Rauheit beziehungsweise Strukturierung oder bei näherer beziehungsweise sequenziellen Betrachtung Unebenheit aufweisen, die jedoch bei einer Gesamtbetrachtung nicht wesentlich ins Gewicht fällt.

Die Vorderseite, die Rückseite und die Seitenkanten können jeweils Flächen und insbesondere Rechtecke sein oder umfassen. Dabei können die Seitenkanten rechtwinklig zu den Vorder- und Rückseiten angeordnet sein. Insbesondere bei einer vorteilhaften keilförmigen Ausführung der Optik können die beiden langen Seitenkanten leicht von einer geometrischen Rechteckform abweichen. Dabei können sie sich entlang der Optik leicht verjüngen beziehungsweise die Dicke der Seitenkante kann entlang der Optik abnehmen.

Der Begriff "Hauptabstrahlrichtung" wird vorliegend als die Richtung verstanden, in die ein Leuchtmittel oder eine Leuchte beziehungsweise eine in einer Leuchte eingesetzte Optik hauptsächlich, mehrheitlich oder bestimmungsgemäss abstrahlt. Typischerweise strahlen Leuchtmittel beziehungsweise Leuchten beziehungsweise Optiken Licht zumindest in einem gewissen Ausmass auch in andere Richtungen als der Hauptabstrahlrichtung ab (Streuung). Als Hauptabstrahlrichtung kann die Richtung verstanden werden, in die das Leuchtmittel beziehungsweise die Leuchte beziehungsweise die Optik zu einem bestimmten Zweck leuchten soll und dazu ausgebildet ist. In einer Lichtverteilungskurve zeigt sich die Hauptabstrahlrichtung typischerweise als ein Maximum. Eine Leuchte beziehungsweise seine Optik(en) können auch mehrere Hauptabstrahlrichtungen aufweisen.

Die Auslenkstruktur kann dazu ausgestaltet sein, zu verhindern, dass in die Optik durch eine ihrer Seitenkanten eingestrahltes Licht diese im Wesentlichen gradlinig durchdringt. Insbesondere kann mit der Auslenkstruktur das die Optik durchdringende also quer und beispielsweise quasi vertikal durch die Optik strömende Licht umgeleitet beziehungsweise in eine Abstrahlrichtung abgelenkt werden.

Der Abstrahlwinkel im Sinne der Erfindung bezieht sich auf einen kleinsten Winkel zwischen der Hauptabstrahlrichtung des durch die Vorderseite abgestrahlten Lichts und der Vorderseite selbst. Bei ebenen Vorderseiten ist dieser Winkel durch die Gerade der Hauptabstrahlrichtung und die Ebene der Vorderseite bestimmt. Bei unebenen Vorderseiten kann sich dieser Winkel aus der Geraden der Hauptabstrahlrichtung und eine Aufsichtebene ergeben. Bei gekrümmten beziehungsweise gebogenen Vorderseiten oder auch bei anderen unebenen Vorderseiten kann sich der Abstrahlwinkel zwischen der Geraden der Hauptabstrahlrichtung und der Oberfläche der Vorderseite am Austrittspunkt des Lichts befinden.

Die erfindungsgemässe Optik ermöglicht, dass sie in einer Leuchte mehr oder weniger vertikal ausgerichtet eingebaut ist und Licht schräg nach unten abgibt. So kann sie beispielsweise in einer Tischleuchte eingesetzt werden und den Tisch beziehungsweise Arbeitsplatz sauber ausleuchten ohne eine am Tisch positionierte Person zu blenden. Dadurch kann eine effiziente, gleichmässige und vollständige Ausleuchtung des Tisches beziehungsweise Arbeitsplatzes erreicht werden.

Zudem kann eine solche Tischleuchte vergleichsweise einfach aufgebaut sein. Insbesondere können bewegliche Teile zur Positionierung des Leuchtkörpers vermieden werden. Dadurch ermöglicht die Optik, dass die Tischleuchte vergleichsweise robust und langlebig ausgeführt ist.

Vorzugsweise ist die Auslenkstruktur so ausgebildet, dass das durch die Vorderseite abgestrahlte Licht einen Lichtstrahl erzeugt, der in Ansicht auf die Vorderseite asymmetrisch zur Vorderseite verläuft. Von vorne auf die Optik her gesehen verläuft der Lichtstrahl also nicht nur nach unten sondern nach links oder nach rechts. Dadurch kann eine Fläche seitlich neben und unterhalb der Optik effizient beleuchtet werden. Beispielsweise kann dies auf Bürotischen vorteilhaft sein, wo es gewünscht ist, Leuchten nicht frontal vor dem Nutzer des Bürotischs sondern seitlich versetzt beispielsweise in einer Ecke des Bürotischs zu platzieren.

Vorzugsweise umfasst die Auslenkstruktur Prismen, die zum Umlenken des Lichts ausgestaltet sind. Solche Prismen können auch als Auskoppelprismen bezeichnet werden. Sie ermöglichen eine effiziente Implementierung der Auslenkstruktur in vielfältiger Weise und in einer Vielzahl von unterschiedlichen Materialien.

Dabei sind die Prismen der Auslenkstruktur vorzugsweise als Linienprismen ausgebildet. Mit solchen Linienprismen kann das die Optik längs oder quer durchdringende Licht effizient umgelenkt werden, sodass es von der im Wesentlichen ganzen Vorderseite abgestrahlt wird. Die Linienprismen der Auslenkstruktur sind dabei vorzugsweise quasi rechtwinklig zum durch die eine der Seitenkanten eingestrahlten Licht angeordnet. So kann die Optik mehr oder weniger geradlinig quer oder längs durchströmendes Licht effizient in Richtung Vorderseite umgeleitet und von dieser abgestrahlt werden.

Die Prismen der Auslenkstruktur sind vorzugsweise in Bezug auf die Vorderseite gleichmässig verteilt. Bei Linienprismen können beispielsweise die Abstände zwischen den einzelnen Linien gleichmässig beziehungsweise einheitlich sein. Dadurch kann eine gleichmässige Abstrahlung des Lichts durch die Vorderseite erreicht werden.

Die Vorder- und Rückseiten können parallel zueinander angeordnet sein. Vorzugsweise stehen die Vorderseite und die Rückseite jedoch in einem Keilwinkel zueinander. Der Keilwinkel ist mit Vorteil kleiner als 45°, kleiner als 30° oder kleiner als 20°. Der Begriff "Keilwinkel" bezieht sich in diesem Zusammenhang auf einen Winkel zwischen den Vorder- und Rückseiten an einer Schnittstrecke beziehungsweise -linie der beiden. Die Schnittstrecke kann sich durch die Vorder- und Rückseiten direkt ergeben, falls sich diese berühren. Oder sie kann sich aus den Verlängerungen der Vorder- und Rückseiten ergeben. Indem die Vorder- und Rückseiten nicht parallel, sondern schräg beziehungsweise angewinkelt zueinander liegen, kann die Auslenkstruktur auf einfache Weise an einer der Vorder- und Rückseiten ausgebildet sein. Dadurch kann in einer konstruktiv vergleichsweise einfachen Ausführung stückweise ein Teil des in die Optik eingestrahlten Lichts ausgelenkt werden, sodass die Vorderseite ein mehr oder weniger flächiges Licht abstrahlt.

Vorzugsweise ist die Optik an einer der Seitenkanten mit einer Lichtausrichtstruktur ausgestattet, wobei die Lichtausrichtstruktur dazu ausgebildet ist, Licht gerichtet zur Auslenkstruktur zu führen. Eine solche Lichtausrichtstruktur ermöglicht auf effiziente Weise, dass vom Leuchtmittel zumindest in einem gewissen Umfang gestreutes Licht quasi vollständig in einer vordefinierten Einstrahlrichtung in die Optik eingestrahlt wird. Dies kann einerseits die Effizienz einer mit der Optik ausgestatteten Leuchte verbessern. Andererseits kann dies ein gleichmässiges, vollständiges beziehungsweise kontrolliertes Auslenken und damit Abstrahlen des Lichts aus der Optik ermöglichen.

Dabei ist die Lichtausrichtstruktur vorzugsweise dazu ausgebildet, Licht mit einem quasi parallelen Strahlengang zur Auslenkstruktur zu führen. Parallel eingestrahltes Licht kann insbesondere eine wohldefinierte beziehungsweise eindeutige Einstrahlrichtung aufweisen. Dies ermöglicht, dass mittels der Auslenkstruktur das Licht auf effiziente Weise und kontrolliert umgelenkt und von der Optik abgestrahlt werden kann.

Vorzugsweise umfasst die Lichtausrichtstruktur eine Mehrzahl von Kollimatoren. Solche Kollimatoren ermöglichen eine genaue Ausrichtung des Lichts. Insbesondere ermöglichen sie auf effiziente Weise, den Strahlengang des Lichts zu parallelisieren.

In einem anderen Aspekt ist die Erfindung eine Tischleuchte mit einem Fussteil und einem sich vom Fussteil nach oben erstreckenden Leuchtteil. Der Leuchtteil umfasst ein Leuchtmittel und eine Optik der oben beschriebenen Ausführungsformen. Dabei ist eine Vorderseite der Optik des Leuchtteils quasi aufrecht ausgerichtet und das Leuchtmittel des Leuchtteils ist benachbart zu einer Seitenkante der Optik des Leuchtteils angeordnet, sodass vom Leuchtmittel erzeugtes Licht durch dieser Seitenkante in die Optik strahlbar ist.

Unter dem Begriff "Tischleuchte" wird hier eine Leuchte verstanden, die spezifisch zur Ausleuchtung eines Tischs beziehungsweise eines Teiles davon wie beispielsweise eines Arbeitsplatzes vorgesehen ist. Typischerweise werden Tischleuchten auf den Tisch selbst oder auch unmittelbar daneben aufgestellt, damit die Tischplatte gut ausgeleuchtet werden kann. Insbesondere werden Tischleuchten bevorzugt in einer Ecke der Tischplatte oder neben einer Ecke der Tischplatte aufgestellt. Je nach Art der Tischleuchte kann der Fuss zum Aufstellen auf eine Tischplatte oder zum Aufstellen auf einem Fussboden ausgebildet sein.

Unter dem Begriff "nach oben erstrecken" wird im Zusammenhang mit dem Leuchtteil eine Anordnung verstanden, bei der der Leuchtteil zumindest zu einem überwiegenden Teil oberhalb des Fussteils beziehungsweise höher als das Fussteil liegt, wenn der Fussteil bestimmungsgemäss abgestellt ist. Dabei kann das Leuchtteil mehr oder weniger vertikal ausgerichtet oder quasi aufrecht angeordnet sein. Der Leuchtteil kann direkt oder indirekt mit dem Fussteil verbunden sein.

Das Leuchtmittel kann der einen der Seitenkanten zugeordnet sein, indem es benachbart zur oder anliegend an die zugehörige Seitenkante angeordnet ist. Dabei kann es vor allem von Bedeutung sein, dass das Leuchtmittel Licht auf die zugehörige Seitenkante strahlt, sodass es durch diese hindurch in die Optik eindringt.

Die erfindungsgemässe Tischleuchte ermöglicht es, die oben im Zusammenhang mit der Optik und deren bevorzugten Ausführungsformen beschriebenen Effekte und Vorteile auf effiziente Weise insbesondere im Zusammenhang mit der Ausleuchtung eines Arbeitsplatzes beziehungsweise Tisches zu realisieren beziehungsweise zu erreichen. Zudem ermöglicht die Tischleuchte, dass sie als ein quasi monolithisches Objekt auf einem Tisch aufgestellt werden kann, was aus ästhetischen Gründen erwünscht sein kann.

Weiter ermöglicht die erfindungsgemässe Optik, dass eine vergleichsweise grosse Abstrahlfläche in der Leuchte vorhanden ist. Insbesondere kann im Vergleich zu herkömmlichen Tischleuchten mit mehr oder weniger punktartiger Lichtabgabe die ganze Vorderseite Licht abstrahlen. Dadurch kann eine vorteilhafte Lichtqualität auf dem Tisch beziehungsweise Arbeitsplatz erreicht werden. Beispielsweise kann die Bildung von Mehrfachschatten vermindert oder gar im Wesentlichen verhindert werden.

Der Fussteil ist vorzugsweise zum Aufstellen auf einer Stellfläche ausgestaltet, wobei die Vorderseite der Optik in einem Standwinkel zur Stellfläche angeordnet ist, der in einem Bereich von etwa 60° bis etwa 120°, in einem Bereich von etwa 70° bis etwa 110°, vorzugsweise in einem Bereich von etwa 80° bis etwa 100° und insbesondere in einem Bereich von etwa 85° bis etwa 105° oder der etwa 90° beträgt. Der Begriff "Stellfläche" bezieht sich im Zusammenhang mit der Leuchte auf eine typischerweise ebene und mehr oder weniger horizontale Fläche wie beispielsweise eine Tischplatte oder ein Fussboden eines Raumes.

Vorzugsweise umfasst der Leuchtteil eine plattenförmige Sekundäroptik, die vor der Vorderseite der Optik angeordnet ist, sodass durch die Vorderseite abgestrahltes Licht die Sekundäroptik durchdringt. Mit einer solchen Sekundäroptik kann das von der Vorderseite der Optik abgestrahlte Licht weiter eingestellt beziehungsweise geformt werden. Beispielsweise kann es so effizient gestreut werden.

Dabei ist die Sekundäroptik des Leuchtteils vorzugsweise dazu ausgestaltet, sie durchdringendes Licht aufzuweiten. Dadurch kann erreicht werden, dass eine vergleichsweise grosse Fläche von der Tischleuchte ausgeleuchtet wird. Auch kann damit das Licht grundsätzlich flächiger erscheinen.

In einer möglichen Ausführungsform ist die Tischleuchte dazu ausgestaltet, eine asymmetrische Lichtverteilungskurve (LVK) zu erzeugen. Der Begriff "asymmetrisch" im Zusammenhang mit dem von der Tischleuchte abgestrahlten Licht beziehungsweise der von der Tischleuchte erzeugten LVK kann sich darauf beziehen, dass Licht nicht in alle Richtungen in gleichem Umfang abgestrahlt wird. Insbesondere kann zum Ausleuchten einer Fläche das abgestrahlte Licht einfach asymmetrisch sein, indem es die Fläche in einer Richtung stärker ausleuchtet als in andere Richtungen. Eine solche Tischleuchte kann auf bevorzugte Weise einen Arbeitsplatz beziehungsweise eine Tischplatte ausleuchten, ohne zu stören.

Dabei kann die Lichtverteilungskurve ein Maximum in einem Bereich zwischen etwa 30° und etwa 60° auf. Eine so asymmetrisch ausleuchtende Tischleuchte kann beispielsweise in einer hinteren Ecke eines Tisches oder neben einem Monitor platziert werden und den Arbeitstisch sauber ausleuchten. Insbesondere befindet sich dabei die Lichtverteilungskurve vorzugsweise quasi vollständig auf einer Seite.

Vorzugsweise umfasst das Leuchtmittel des Leuchtteils eine Mehrzahl Leuchtdioden, die entlang einer Seitenkante der Optik des Leuchtteils angeordnet sind. Eine solche Anordnung des Leuchtmittels kann eine effiziente und gezielte Einspeisung von Licht in die Optik ermöglichen. Dabei ist jede der Mehrzahl von Leuchtdioden vorzugsweise einem einzelnen Kollimator einer Lichtausrichtstruktur der Optik zugeordnet. Auf diese Weise kann das von jeder einzelnen Leuchtdiode erzeugte Licht effizient gerichtet und in die Optik eingestrahlt werden.

Vorzugsweise ist das Leuchtmittel des Leuchtteils oberhalb der Optik des Leuchtteils angeordnet. Eine solche Anordnung ermöglicht eine effiziente Ausgestaltung der Tischleuchte mit einer quasi vertikalen Optik.

### Kurze Beschreibung der Zeichnungen

Weitere vorteilhafte Ausgestaltungen der Erfindung ergeben sich aus der nachfolgenden Beschreibung von Ausführungsbeispielen der Erfindung mithilfe der schematischen Zeichnung. Insbesondere werden im Folgenden die erfindungsgemässe Optik und die erfindungsgemässe Tischleuchte unter Bezugnahme auf die beigefügten Zeichnungen anhand von Ausführungsbeispielen detaillierter beschrieben. Es zeigen:
- Fig. 1: eine perspektivische Ansicht eines ersten Ausführungsbeispiels einer erfindungsgemässen Optik;
- Fig. 2: eine Seitenansicht eines ersten Ausführungsbeispiels einer erfindungsgemässen Tischleuchte mit der Optik von Fig. 1;
- Fig. 3: eine Vorderansicht der Tischleuchte von Fig. 2;
- Fig. 4: eine teilweise durchsichtige seitliche Detailansicht der Tischleuchte von Fig. 2;
- Fig. 5: eine schematische Ausleuchtung eines Arbeitsplatzes, wie sie mit der Tischleuchte von Fig. 2 erzeugt werden kann;
- Fig. 6: eine Lichtverteilungskurve der Tischleuchte von Fig. 2;
- Fig. 7: eine schematische Ausleuchtung eines Arbeitsplatzes, wie sie mit einem zweiten Ausführungsbeispiel einer erfindungsgemässen Tischleuchte mit einem zweiten Ausführungsbeispiel einer erfindungsgemässen Optik erzeugt werden kann; und
- Fig. 8: eine Lichtverteilungskurve der Tischleuchte von Fig. 7.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Fig. und der zugehörigen Beschreibung der verschiedenen Aspekte und Ausführungsbeispielen zu vermeiden, sollen bestimmte Merkmale als gemeinsam für verschieden Aspekte und Ausführungsbeispiele verstanden werden. Das Weglassen eines Aspekts in der Beschreibung oder einer Fig. lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

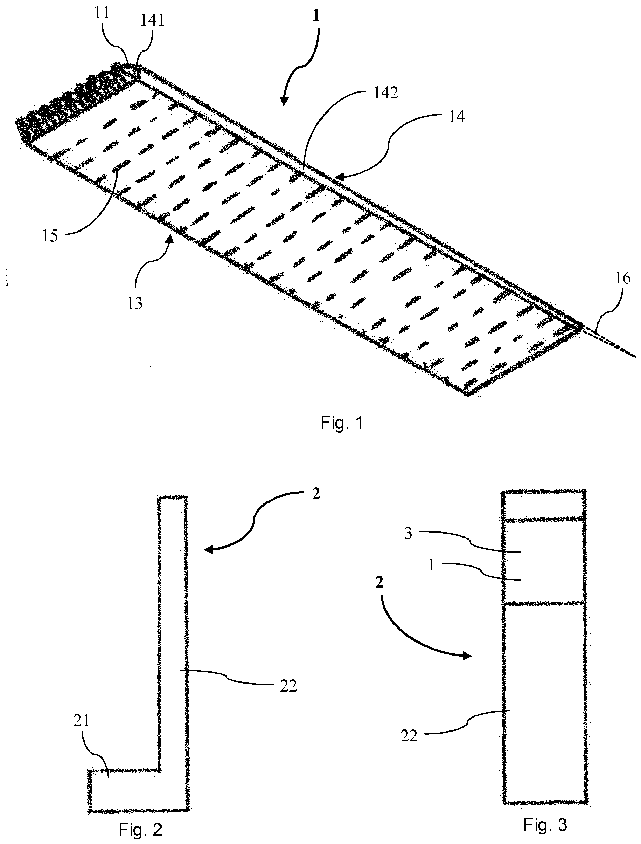

Fig. 1 zeigt ein erstes Ausführungsbeispiel einer erfindungsgemässen plattenartigen Optik 1. Die Optik 1 umfasst eine Vorderseite 12 (in Fig. 1 nicht ersichtlich), eine Rückseite 13 sowie die Vorderseite 12 und die Rückseite 13 miteinander verbindende Seitenkanten 14. Die Vorder- und Rückseiten 12, 13 weisen jeweils eine rechteckige Grundform auf. Die Seitenkanten 14 umfassen eine rechteckige obere Seitenkante 141 und zwei parallele Längsseitenkanten 142. Die Längsseitenkanten 142 werden entlang der Optik 1 und weg von der oberen Seitenkante 141 schmäler. Die Optik 1 ist also leicht keilförmig. Insbesondere schneiden sich die Ebenen in denen die Vorder- und Rückseiten 12, 13 liegen ausserhalb der Optik 1 in einem Keilwinkel 16 von weniger als 20°.

Die obere Seitenkante 141 ist mit neun Einkoppelkollimatoren 11 als Lichtausrichtstruktur ausgestattet. Die Einkoppelkollimatoren 11 sind dazu ausgebildet, Licht mit einem quasi parallelen Strahlengang in die Optik 1 einzuleiten. Dadurch strömt durch die Einkoppelkollimatoren 11 und somit die obere Seitenkante 141 eingestrahltes Licht geradlinig etwa parallel zu den Längsseitenkanten 142 in die Optik 1.

Die Rückseite 13 ist mit einer Vielzahl von regelmässig dichter beabstandeten Linienprismen 15 als Auslenkstruktur ausgestattet. Die Linienprismen 15 sind dazu ausgestaltet, durch die obere Seitenkante 141 eingestrahlte Licht in Richtung der Vorderseite 12 umzuleiten, sodass es durch die Vorderseite 12 abgestrahlt wird. Dabei liegen die Linienprismen 15 orthogonal zum durch die Einkoppelkollimatoren 11 erzeugten parallelen Strahlengang beziehungsweise parallel zur oberen Seitenkante 141. Durch die keilartige Form der Optik 1 wird erreicht, dass das durch die obere Seitenkante 141 parallelisiert einströmendes Licht Schritt für Schritt beziehungsweise kontinuierlich ausgelenkt und durch die Vorderseite 12 abgestrahlt wird.

In Fig. 2 und Fig. 3 ist ein erstes Ausführungsbeispiel einer Tischleuchte 2 gezeigt, in der die Optik 1 eingebaut ist. Die Tischleuchte 2 umfasst einen horizontal ausgerichteten Fussteil 21 und einen sich vom Fussteil 12 vertikal nach oben erstreckenden Leuchtteil 22. Wie in Fig. 2 ersichtlich ist, weist die Tischleuchte 2 in der Seitenansicht ein L-förmiges Profil auf und, wie in Fig. 3 ersichtlich ist, eine rechteckige Front. Die Optik 1 ist in einem oberen Drittel des Leuchtteils 22 angeordnet und von einer rechteckigen Sekundäroptik 3 abgedeckt. Im Fussteil 21 ist die Elektronik der Tischleuchte 2 platziert. Alternativ dazu kann die Elektronik auch im unteren Bereich des Leuchtteils 22 platziert sein oder in die Fuss- und Leuchtteile 21, 22 aufgeteilt. Auch kann die Elektronik teilweise oder vollständig beispielsweise in ein Kabel ausgelagert sein.

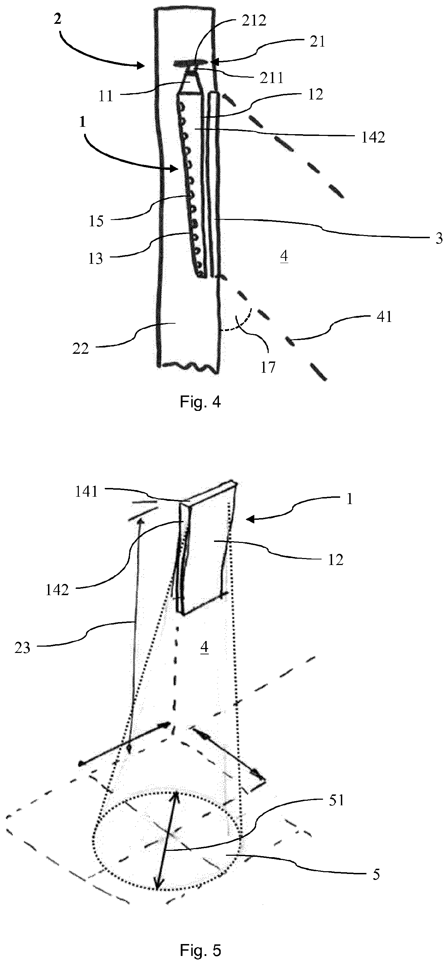

In Fig. 4 ist das obere Drittel der Tischleuchte 2 gezeigt, wobei es zur Illustration teilweise durchsichtig dargestellt ist. Dabei ist ersichtlich, dass die Optik 1 hinter der vertikal ausgerichteten, plattenartigen Sekundäroptik 3 liegt. Insbesondere grenzt die Vorderseite 12 der Optik 1 an die Sekundäroptik 3 an. Die Tischleuchte 2 umfasst ein Leuchtmittel 21 mit im dargestellten Ausführungsbeispiel neun in einer Reihe an einer Platine 212 montierten Leuchtdioden 211. Dabei ist immer eine Leuchtdiode 211 einem der Einkoppelkollimatoren 11 der Optik 1 zugeordnet, sodass von den Leuchtdioden 211 erzeugtes Licht jeweils vom zugehörigen Einkoppelkollimator 211 parallelisiert und entlang der Längsseitenkanten 142 vertikal nach unten in beziehungsweise durch die Optik 1 strömt. Durch die sich nach unten verjüngende Form der Optik 1 wird portionenweise ein Teil des Lichts von einem der Linienprismen 15 in Richtung Vorderseite 12 umgeleitet und von dieser durch die Sekundäroptik 3 abgestrahlt. Dadurch erzeugt die Tischleuchte 2 einen Lichtstrahl 4, der von der Vorderseite 12 der Optik 1 beziehungsweise der Sekundäroptik 3 ausgeht.

Dabei weist der Lichtstrahl 4 eine Hauptabstrahlrichtung 41 auf, die einen Abstrahlwinkel 17 zur Vorderseite 12 beziehungsweise zur Sekundäroptik 3 beschreibt, der etwa 45° beträgt. Insbesondere ist der Abstrahlwinkel 17 durch die Ebene der Vorderseite 12 der Optik 1 beziehungsweise der Sekundäroptik 3 und eine Gerade, in der die Hauptabstrahlrichtung 41 liegt, gebildet.

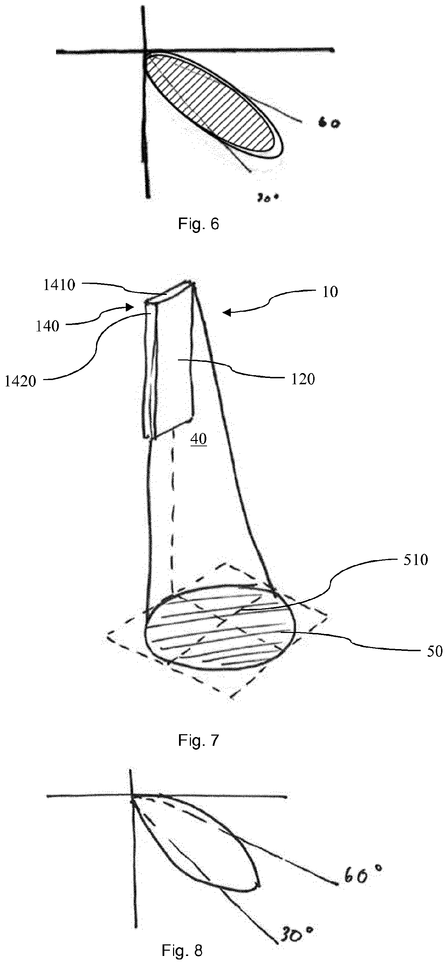

Wie in Fig. 5 ersichtlich ist, wird der Lichtstrahl 4 von den Linienprismen 15 nicht nur so geleitet beziehungsweise erzeugt, dass er schräg nach unten verläuft, sondern auch, dass er asymmetrisch nach links versetzt ist. Dadurch kann die Tischleuchte 2 schräg versetzt auf einem Tisch platziert werden und einen Arbeitsplatz ausleuchten, ohne zu stören. Beispielsweise kann die Optik etwa 70 mm breit und 270 mm hoch sein und die Linienprismen 15 dazu ausgebildet, dass ein kreisförmiger Spot 5 auf dem Tisch erzeugt wird, der einen Spotdurchmesser 51 von etwa 700 mm aufweist, wenn die obere Seitenkante 141 der Optik 1 in einer Stellhöhe 25 von etwa 500 mm oberhalb der Tischplatte liegt. Zudem kann ein Mittelpunkt des Spots 5 dabei etwa 500 mm seitlich und etwa 500 mm nach vorne versetzt sein. In Fig. 6 ist die zugehörige asymmetrische Lichtverteilungskurve der Leuchte 2 gezeigt.

Fig. 7 zeigt schematisch eine Ausleuchtung eines Tischs als Arbeitsplatz mittels eines zweiten Ausführungsbeispiels einer erfindungsgemässen Tischleuchte, die ein zweites Ausführungsbeispiel einer erfindungsgemässen plattenartigen Optik 10 umfasst. Die Optik 10 weist eine Vorderseite 120, eine Rückseite (in Fig. 7 nicht ersichtlich) sowie die Vorderseite 120 und die Rückseite miteinander verbindende Seitenkanten 140. Die Vorder- und Rückseiten 120 weisen jeweils eine rechteckige Grundform auf. Die Seitenkanten 140 umfassen eine rechteckige obere Seitenkante 1410 und zwei parallele Längsseitenkanten 1420. Die Längsseitenkanten 1420 werden entlang der Optik 10 und weg von der oberen Seitenkante 1410 schmäler. Die Optik 10 ist also leicht keilförmig. Die Optik 10 ist mit Einkoppelkollimatoren als Lichtausrichtstruktur und Linienprismen als Auslenkstruktur ähnlich der Optik 1 der Fig. 1 ausgestattet. Die Linienprismen sind dazu ausgestaltet, durch die obere Seitenkante 141 eingestrahlte Licht in Richtung der Vorderseite 12 umzuleiten, sodass es durch die Vorderseite abgestrahlt wird.

Insbesondere wird der Lichtstrahl 40 von den so geleitet beziehungsweise erzeugt, dass er von der Vorderseite 120 ohne seitlichen Versatz schräg nach unten verläuft. Dadurch kann die Tischleuchte einen Arbeitsplatz ausleuchten, indem sie frontal auf ihn ausgerichtet wird. Beispielsweise kann die Optik wiederum etwa 70 mm breit und 270 mm hoch sein und die Linienprismen dazu ausgebildet, dass ein kreisförmiger Spot 50 auf dem Tisch erzeugt wird, der einen Spotdurchmesser 510 von etwa 700 mm aufweist, wenn die obere Seitenkante 1410 der Optik 10 in einer Stellhöhe 25 von etwa 500 mm oberhalb der Tischplatte liegt. In Fig. 8 ist eine zugehörige Lichtverteilungskurve der Leuchte gezeigt.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt.

## Patentansprüche

1. Optik (1; 10) für eine Tischleuchte (2), die im Wesentlichen plattenförmig mit einer Vorderseite (12; 120), einer Rückseite (13), die Vorderseite (12; 120) und die Rückseite (13) miteinander verbindenden Seitenkanten (14; 140) und einer Auslenkstruktur (15) ausgebildet ist, wobei
die Auslenkstruktur (15) dazu ausgestaltet ist, durch eine der Seitenkanten (14; 140) eingestrahltes Licht umzuleiten, sodass es durch die Vorderseite (12; 120) abgestrahlt wird,
**dadurch gekennzeichnet,**
**dass** die Vorderseite (12; 120) zur quasi aufrechten Ausrichtung ausgestaltet ist, und
**dass** die Auslenkstruktur (15) so ausgebildet ist, dass das durch die Vorderseite (12; 120) abgestrahlte Licht eine Hauptabstrahlrichtung (41) aufweist, die einen Abstrahlwinkel (17) zur Vorderseite (12; 120) beschreibt, der in einem Bereich von etwa 10° bis etwa 70°, vorzugsweise in einem Bereich von etwa 20° bis etwa 60° und insbesondere in einem Bereich von etwa 30° bis etwa 50° liegt oder der etwa 45° beträgt.

2. Optik (1; 10) nach Anspruch 1, wobei die Auslenkstruktur (15) so ausgebildet ist, dass das durch die Vorderseite (12; 120) abgestrahlte Licht einen Lichtstrahl (4) erzeugt, der in Ansicht auf die Vorderseite (12; 120) asymmetrisch zur Vorderseite (12; 120) verläuft.

3. Optik (1; 10) nach Anspruch 1 oder 2, wobei die Auslenkstruktur (15) Prismen umfasst, die zum Umlenken des Lichts ausgestaltet sind, wobei die Prismen der Auslenkstruktur (15) vorzugsweise als Linienprismen ausgebildet sind, die vorzugsweise quasi rechtwinklig zum durch die eine der Seitenkanten (14; 140) eingestrahlten Licht angeordnet sind.

4. Optik (1; 10) nach Anspruch 3, wobei die Prismen der Auslenkstruktur (15) in Bezug auf die Vorderseite (12; 120) gleichmässig verteilt sind.

5. Optik (1; 10) nach einem der vorangehenden Ansprüche, wobei die Vorderseite (12; 120) und die Rückseite (13) in einem Keilwinkel (16) zueinander stehen.

6. Optik (1; 10) nach Anspruch 5, wobei der Keilwinkel (16) kleiner als 45°, kleiner als 30° oder kleiner als 20° ist.

7. Optik (1; 10) nach einem der vorgehenden Ansprüche, die an einer der Seitenkanten (14; 140) mit einer Lichtausrichtstruktur (11) ausgestattet ist, wobei die Lichtausrichtstruktur (11) dazu ausgebildet ist, Licht gerichtet zur Auslenkstruktur (15) zu führen.

8. Optik (1; 10) nach Anspruch 7, wobei die Lichtausrichtstruktur (11) dazu ausgebildet ist, Licht mit einem quasi parallelen Strahlengang zur Auslenkstruktur (15) zu führen.

9. Optik (1; 10) nach Anspruch 7 oder 8, wobei die Lichtausrichtstruktur (11) eine Mehrzahl von Kollimatoren umfasst.

10. Tischleuchte (2) mit einem Fussteil (21) und einem sich vom Fussteil (21) nach oben erstreckenden Leuchtteil (22), bei der
der Leuchtteil (22) ein Leuchtmittel (21) und eine Optik (1; 10) gemäss einem der vorangehenden Ansprüche umfasst, wobei
eine Vorderseite (12; 120) der Optik (1; 10) des Leuchtteils (22) quasi aufrecht ausgerichtet ist, und
das Leuchtmittel (21) des Leuchtteils (22) benachbart zu einer Seitenkante (14; 140) der Optik (1; 10) des Leuchtteils (22) angeordnet ist, sodass vom Leuchtmittel (21) erzeugtes Licht durch diese Seitenkante (14; 140) in die Optik (1; 10) strahlbar ist.

11. Tischleuchte (2) nach Anspruch 10, bei welcher der Fussteil (21) zum Aufstellen auf einer Stellfläche ausgestaltet ist, wobei die Vorderseite (12; 120) in einem Standwinkel zur Stellfläche angeordnet ist, der in einem Bereich von etwa 60° bis etwa 120°, in einem Bereich von etwa 70° bis etwa 110°, vorzugsweise in einem Bereich von etwa 80° bis etwa 100° und insbesondere in einem Bereich von etwa 85° bis etwa 105° oder der etwa 90° beträgt.

12. Tischleuchte (2) nach Anspruch 10 oder 11, bei welcher der Leuchtteil (22) eine plattenförmige Sekundäroptik (3) umfasst, die vor der Vorderseite (12; 120) der Optik (1; 10) angeordnet ist, so dass durch die Vorderseite (12; 120) abgestrahltes Licht die Sekundäroptik (3) durchdringt, wobei die Sekundäroptik (3) des Leuchtteils (22) vorzugsweise dazu ausgestaltet ist, sie durchdringendes Licht aufzuweiten.

13. Tischleuchte (2) nach einem der Ansprüche 10 bis 12, die dazu ausgestaltet ist, eine asymmetrische Lichtverteilungskurve zu erzeugen.

14. Tischleuchte (2) nach einem der Ansprüche 10 bis 13, wobei das Leuchtmittel (21) des Leuchtteils (22) eine Mehrzahl Leuchtdioden (211) umfasst, die entlang einer Seitenkante (14; 140) der Optik (1; 10) des Leuchtteils (22) angeordnet sind, wobei vorzugsweise jede der Mehrzahl von Leuchtdioden (211) einem einzelnen Kollimator einer Lichtausrichtstruktur (11) der Optik (1; 10) zugeordnet sind.

15. Tischleuchte (2) nach einem der Ansprüche 10 bis 14, wobei das Leuchtmittel (21) des Leuchtteils (22) oberhalb der Optik (1; 10) des Leuchtteils (22) angeordnet ist.
